# EUROPÄISCHE PATENTSCHRIFT

(11) **EP 4 035 189 B1**
(45) Veröffentlichungstag und Bekanntmachung des Hinweises auf die Patenterteilung: **25.06.2025**
(21) Anmeldenummer: 20797391.8
(22) Anmeldetag: 09.10.2020
(51) Int. Cl.: H01C 17/065, H01C 7/105, H02K 11/26

(54) **VORRICHTUNG ZUM SPANNUNGSAUSGLEICH BEI RECHTECKSPANNUNGEN FÜR EIN ELEKTROMOTOR**
DEVICE FOR COMPENSATING VOLTAGE IN SQUARE-WAVE VOLTAGES FOR AN ELECTROMOTOR
DISPOSITIF DE COMPENSATION DE TENSION D'UNE TENSION RECTANGULAIRE POUR UN MOTEUR ÉLECTRIQUE

(30) Priorität: 05.11.2019 EP 19207121
(43) Veröffentlichungstag der Anmeldung: 03.08.2022
(73) Patentinhaber: Innomotics GmbH, 90441 Nürnberg (DE)
(72) Erfinder: KATZENBERGER, Tobias, 97631 Bad Königshofen STT Untereßfeld (DE); PLOCHMANN, Bastian, 91413 Neustadt an der Aisch (DE)
(74) Vertreter: Michalski Hüttermann & Partner Patentanwälte mbB
(86) Internationale Anmeldenummer: PCT/EP2020/078457
(87) Internationale Veröffentlichungsnummer: WO 2021/089271

(56) Entgegenhaltungen:
- EP-B1- 0 977 337
- EP-B1- 0 977 337
- CN-A- 103 036 485
- CN-A- 103 036 485

## Beschreibung

Die Erfindung betrifft eine Vorrichtung zum Spannungsausgleich bei Rechteckspannungen, insbesondere in einer, einer wilden Wicklung von Leitungen in einer Nut eines Elektromotors vorgeschalteten, Klemmbrettschaltung. In Dokument CN103036485A wird eine Vorrichtung zur Ableitung eines Überstroms in einem Windgenerator beschrieben. Des Weiteren bezieht sich das Dokument auf eine Vorrichtung zur Ableitung eines Überstroms in einem Windgenerator, wenn absehbar ist, dass die Batterie voll sein wird, dann wird eine Überbrückungslösung bereitgestellt.

Niederspannungsmotoren, also Motoren mit einer Spannung bis 1000V "direct-on-line" DOL und/der 690V "variable speed drive" VSD, sind mit einem so genannten "Teilentladungs-freien" Isolationssystem ausgestattet, das der Motoren-Norm IEC 60034-18-41 entspricht. Insbesondere ist das eine Isolation, die einen Drahtlack auf dem Leiter umfasst, beispielsweise in einer Schichtdicke von ca. 200µm und - wiederum beispielsweise - in einem Multilagenaufbau, z. B. mit Polyimiden wie dem Polyamidimid PAI.

Der so beschichtete Leiter kommt als Kabel, insbesondere in Form einer so genannten "wilden Wicklung" also einer ungeordneten Wicklung, bei der der Draht der 90zigsten Wicklung angrenzend an den Draht der ersten Wicklung zu liegen kommen kann, in eine Nut eines Elektromotors. In der Nut befindet sich in der Regel ein so genannter Nutkasten als Hauptisolation, der standardmäßig eine Art U-förmig gefalztes Papier ist. In der Regel hat das Papier einen Träger, der beidseitig isolierend beschichtet ist, insbesondere mit einem Verbundwerkstoff, Verstärkungsfasern enthaltend, isolierend beschichtet ist. Beispielsweise handelt es sich um das handelsübliche Material NOMEX, das auch beispielsweise über eine Klebeschicht mit dem Träger der Papiernut verbunden sein kann. Der Träger ist beispielsweise eine Kunststofffolie, beispielsweise eine PET Folie. Die Dicke der Folie liegt z.B. im Bereich von 200µm.

Im Fertigungsverlauf der Herstellung der Elektromotoren werden zuerst die Nutkästen in die Nuten des Metallpakets "eingeschossen". Danach wird die vorgewickelte Leiterdrahtwicklung mechanisch eingezogen.

Im Bereich der Wickelköpfe werden die Wicklungen der jeweiligen Phasen durch Einlege-Papiere voneinander getrennt, diese Papiere haben in der Regel den gleichen Materialaufbau wie die Nutkästen, die oben beschrieben sind.

Nach dem Formen der Wickelköpfe und deren Bandagierung werden diese zur Fertigstellung der Isolation in eine Harzmatrix eingebettet. Dabei kommt beispielsweise eine Imprägnierung mit Imprägniermittel, die im Wesentlichen ein flüssiges Harz wie ein Epoxidharz, Polyetherimid -PEI- Harz oder ähnliches umfassen, PEI durch Kalttauchen, Heißtauchen und/oder Träufeln des flüssigen Harzes und nachfolgende Aushärtung zur Anwendung. Durch die Imprägnierung werden die Drahtzwischenräume, die Räume vor und hinter den Nutkästen, sowie die geometrischen Zwickel in den Wickelköpfen zumindest teilweise mit Imprägnierharz gefüllt. Das Imprägnierharz dient zur mechanischen Fixierung und Entwärmung der Leiterwicklung, dient aber als Dielektrikum auch der Isolierung.

Der Leiter ist dabei durch Drahtlack, Imprägnierung, Nutkasten und weitere Imprägnierung isoliert. Elektrisch kann man sich dabei das Isoliersystem als Kondensator mit verschiedenen dielektrischen Werkstoffen vereinfacht vorstellen, wobei die elektrischen Feldlinien immer in Bereiche mit niedrigem Epsilon verdrängt werden, was im Zweifel immer eine Luft gefüllte Pore und/oder ein unvollständig ausgehärteter Harzbereich des Imprägniermittels ist.

Ein derartiges Isoliersystem erfüllt die Anforderungen hinsichtlich der Betriebsspannung der Motoren sehr gut, insbesondere hinsichtlich Durchschlagsfestigkeit, Isolationswiderstand, Verlustfaktor. Darüber hinaus ist das System einfach und kostengünstig massenfertigungstauglich herstellbar.

Die technische Entwicklung hat gezeigt, dass diese Elektromotoren jedoch vermehrt mit Umrichter betrieben und geschaltet, wobei es zu scharfen Schaltvorgängen kommt, die Rechteckspannungen mit wesentlich höheren Spannungsspitzen bei Anstiegsflanken von bis zu 150ns erzeugen. So kommt es isolationsseitig zu deutlichen Spannungs-Überschwingern bei den Schaltvorgängen.

Ein "Umrichter" ist insbesondere ein Wechselstrom-Umrichter dessen Umrichtung einer Sinusschwingung über eine Frequenzsteuerung in eine Rechteckspannung der direkten Versorgung und Steuerung der Drehzahl einer elektrischen Maschine wie eines Drehstrommotors im Rahmen der elektrischen Antriebstechnik dient.

Eine Rechteckschwingung bezeichnet ein periodisches Signal, das zwischen zwei Werten hin und her schaltet und in einem Diagramm über der Zeit einen rechteckigen Verlauf aufweist. Der ideal rechteckige Verlauf existiert nur theoretisch. In der Realität können Flanken nicht senkrecht ansteigen und somit einen unendlich steilen Sprung ausführen; den stattdessen realen Sprung beschreiben die Anstiegs- und Abfallzeiten. Unter anderem wegen des kapazitiven und induktiven Verhaltens der Übertragungsleitungen weist ein Rechtecksignal in der Regel ein Unter- und Überschwingen auf. Während das Unterschwingen für die Isolation unerheblich ist, können durch das Überschwingen Spannungsspitzen entstehen, die zu Teilentladungen, die ihrerseits zur Zersetzung der Isolation führen, entstehen.

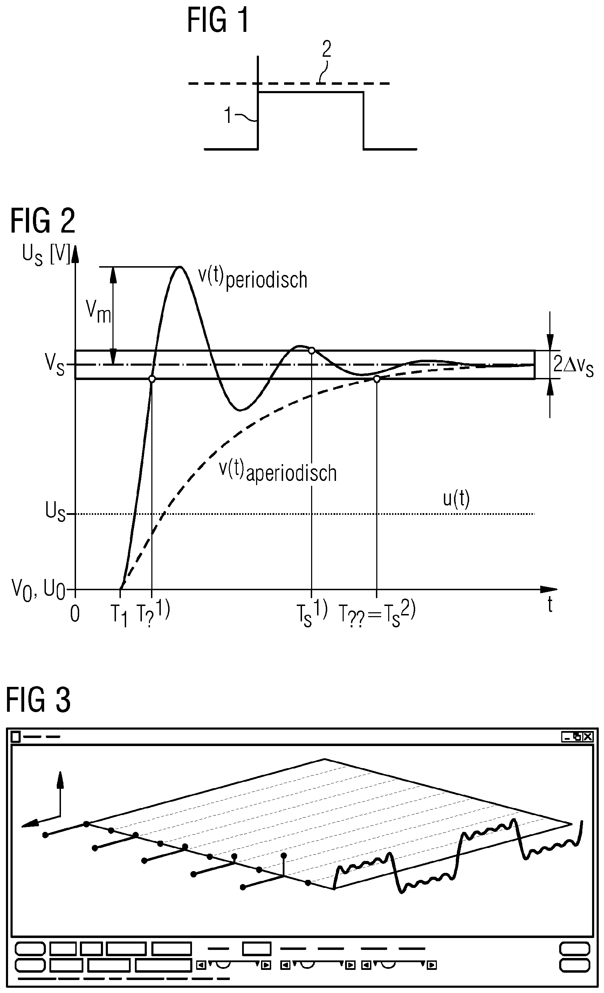

Grund dafür ist, dass elektrotechnisch bei Überschwingern eine scharfe Flanke mittels Überlagerungen von sehr hohen Frequenzen im Bereich von beispielsweise 1kHz bis 1MHz, erzeugt werden. In Figur 1 ist eine Rechteckspannung eines Umrichters mit Überschwinger im Flankenbereich gezeigt.

Dabei zeigt die durchgehende Linie 1 den Spannungsverlauf mit Zielspannung und Überschwinger der Rechteckspannung, wobei tr gleichbleibend ist, die Spannung Upk jedoch deutlich über der Teilentladungs-Einsetzspannung liegt, aber trotzdem keine Teilentladung zu erkennen ist.

Die Rechteckspannung verläuft beispielsweise so, dass 1000 Volt Spannung mit 0 Volt abwechseln, wobei durch Fourier Transformation die Sinusschwingungen überlagert werden, so dass die Rechteckschwingungen entstehen. Die gestrichelte Linie 2 zeigt die Spannungsmaxima der Sinusschwingungen.

Figur 2 zeigt den Verlauf der überschwingenden Spannung im Flankenbereich des Umrichters im Detail.

Die beschriebenen und dargestellten Überspannungen übertreffen häufig die Teilentladungseinsetzspannung im Isolationssystem, z.B. Draht-Draht, welche durch Poren, Hohlräume und Materialwechsel und damit einhergehendes unterschiedliches Epsilon an Schwachpunkten existiert und es kommt somit über das Paschen-Minimum zum Einsetzen von Teilentladungen. Diese Teilentladungen zünden dann im Umrichterbetrieb fortlaufend und werden durch die fortschreitende Erosion des einbettenden Kunststoffes weiter verstärkt, wodurch es relativ zeitnah zum Ausfall des Isolationssystems und somit zum Motordefekt kommt.

Figur 3 zeigt die Frequenzüberlagerung einer Rechteckspannung, wie sie für das oben beschriebene Szenario typisch ist.

Das resultierende Teilentladungsproblem zeigt sich - beispielsweise - im Wickelkopf zwischen zwei kritischen und - wegen der wilden Wicklung - sich berührenden Drähten. Ist deren Teilentladungs-Einsetzspannung, die sich im Wesentlichen aus der Drahtisolierung der beiden Drähte, dem Imprägnierharz, dessen Aushärtung und gegebenenfalls mit Luft gefüllten Poren ergibt, überschritten, dann kommt es zu Teilentladungen. Diese Entladungen bewirken - im schlechtesten Fall bei jedem Umrichter-Impuls - eine Oxidation, also Zersetzung des Imprägnierharzes und gegebenenfalls auch des Drahtlackes.

Dadurch kann es zur vollständigen Entladung über einen Durchschlag kommen. Dann gibt es einen Kurzschluss zwischen den betroffenen Windungen der wilden Wicklung. Das hat zur Folge, dass an dieser Stelle aufgrund des Kurzschlussstromes die Temperatur deutlich ansteigt bis die betroffenen Drähte "durchbrennen". Dadurch wird der Motorstrom unsymmetrisch und die Wicklung brennt als Folge komplett durch oder aber der Umrichter erkennt die Asymmetrie und schaltet ab. In beiden Fällen ist der Motor defekt und irreparabel.

Eine sehr hochwertige Imprägnierung, die eine nahezu 100% Füllung der Draht/Nutkasten-Zwischenräume bewirkt, würde das Problem zwar lösen, jedoch ist dies entweder mit einem wesentlich teurerem Imprägniermittel und/oder aufwändigerem und damit teurerem Imprägnier-Prozess verbunden.

Aufgabe der vorliegenden Erfindung ist daher die Schaffung eines preiswerten, effektiven Schutzes vor Schäden des Motors und/oder der Isolation durch Teilentladungen wegen Überschwinger im Betrieb einer elektrischen Maschine mittels Umrichter.

Diese Aufgabe wird durch den Gegenstand der vorliegenden Erfindung, wie er in der Beschreibung, den Figuren und den Ansprüchen offenbart ist, gelöst.

Dementsprechend ist Gegenstand der Erfindung eine Vorrichtung zum Spannungsausgleich bei Rechteckspannungen von Elektromotoren mit Klemmbrettschaltung nach Anspruch 1, wobei in der Klemmbrettschaltung die Phasen U, V und W, jeweils in Form von ein- und ausgehenden, verkabelten Leitungen, die sich auf zumindest 6 Kabel addieren, vorliegen, und zumindest eine Brücke zwischen zumindest zwei Kabeln vorgesehen ist, die zwei oder mehr der zumindest 6 Kabel-ein- und -ausgänge verbindet, wobei die Brücke teilleitfähig ist, so dass ihr elektrischer Widerstand ab einem Schwellwert deutlich absinkt, wobei die Teilleitfähigkeit auf Füllstoffpartikel in einer bettenden Matrix basiert, die das Absinken des Widerstandes in der Brücke ab dem Schwellwert maßgeblich beeinflussen.

Es ist die allgemeine Erkenntnis der Erfindung, dass durch Verbrückung zumindest zweier Phasen einer Klemmbrettschaltung eines Elektromotors, dieser bei Betreiben mittels eines Umrichters vor dem Durchschlagen von Teilentladungen, die bei Rechteckspannungen unvermeidlich sind, geschützt werden kann, dadurch, dass entstehende Teilentladungen durch die Brücke auf Erde und/oder Masse abgeleitet werden und damit den Elektromotor selbst nicht erreichen und nicht belasten. Die Lebensdauer der mit Umrichter betriebenen Elektromotoren kann so um ein Vielfaches gesteigert werden.

Dies insbesondere deshalb, weil das Verbundmaterial der Brücke bei geringen Spannungen einen hohen Widerstand zeigt, dafür aber bei hohen Spannungen - wie sie bei Teilentladungen auftreten - in Folge des nicht-linearen Verhaltens des Partikel-Widerstandes einen geringen Widerstand zeigt und ausreichend leitfähig wird, damit es eine galvanische Brücke zwischen den zwei oder mehr Kabeln bildet, die die hohe Spannung einer Teilentladung abfängt und ableitet, vor sie auf die Isolation und/oder den Motor auftrifft.

Unter "Schwellwert" wird hier ein - für das jeweilige Material charakteristischer Wert verstanden. Dieser wird hinsichtlich Frequenz, Spannung und/oder Feldstärke für jedes Material und/oder jede Anwendung naturgemäß eigen zu definieren sein, weil er vom Material, dessen Auftrag, dem Träger und anderen Umgebungsfaktoren abhängt.

Die Brücke umfasst beispielsweise einen Träger, in der Regel ein isolierendes Substrat, wie eine Leiterplatte, das beispielsweise aus einem Faserverstärkten Kunststoff, insbesondere aus Epoxidharz und/oder Polysiloxan, aus thermoplastischem Kunststoff, wie Polyetheretherketon - PEEK **-,** Polyamid - PA **-,** Polyethylen - PE **-,** Polyethylenterephthalat - PET -, Polybutylenterephthalat - PBT -aber auch aus Holz, Pressspan, Kunststoff, aus Keramik und/oder Leder ist.

Als Verstärkungsfasern werden dabei z. B. Glasfasern, Kohlefasern, Keramikfasern und/oder Aramidfasern eingesetzt.

Dieses Substrat selbst kann Teil der bettenden Matrix sein und/oder diese vollständig bilden.

Grundsätzlich kann die Brücke durch eine Oberflächenbeschichtung eines elektrisch isolierenden Substrates ohne eigene Oberflächenleitfähigkeit mit einem teilleitfähigen Lack, der Füllstoffpartikel enthält, die dem Lack und der damit beschichteten Oberfläche die gewünschte, spannungsabhängige elektrische Leitfähigkeit verleihen.

Alternativ dazu kann der Füllstoff in einen Kunststoff, der ohne Substrat angewendet kann, eingearbeitet sein, sowie der Füllstoff auch in eine keramische Matrix eingearbeitet sein kann. Eine bevorzugte Form der Applikation des teilleitfähigen Verbundmaterials ist die einfache Beschichtung durch - wiederum beispielsweise Sprühen - eines Substrates mit einem teilleitfähigen Lack.

Die bettende Matrix des Lackes härtet bevorzugt polymer aus. Zur Bildung des Verbundmaterials, das die Brücke bildet, beispielsweise eines teilleitfähigen Lackes ist die bettende Matrix bevorzugt organisch basiert und nicht keramisch, beispielsweise ein als Duromer aushärtendes Harz oder eine duromer aushärtende Harzmischung. Dabei kommen vernetzende Verbindungen, die Polymere wie Epoxy, Polyetherimid - PEI - Polysiloxan, Polysilazan, jeweils wahlweise mit oder ohne Lösungsmittel, zum Einsatz.

Anstelle einer bettenden Polymermatrix kann auch eine keramische Sinterschicht zum Einsatz kommen, die zur mechanischen Fixierung der teilleitfähigen Füllstoffpartikel zur Bildung des Verbundmaterials, das die Brücke bildet, nutzbar ist.

Die Applikation des Lackes auf dem Substrat erfolgt wahlweise nach üblichen Methoden wie beispielsweise Schichtapplikation durch Sprühen, Rakeln, Spincoating, Dipcoating und/oder Pinseln.

Die Schichtdicken des Lackes liegen zwischen 20 µm bis 1 mm, vorzugsweise zwischen 50 µm und 200 µm, jeweils auch bedingt durch die angewendete Applikation. Die untere Grenze der Dicke des Lackes ist die Partikelgröße der größten Füllstoff-partikelfraktion. Die obere Grenze wird durch die mechanische Stabilität des Lackes, beeinflusst durch Verdampfung des Lösungsmittels, soweit vorhanden, durch Rissbildung im Lack und ähnliche Parameter beeinflusst.

Im Allgemeinen ist die Lackbeschichtung auf dem Substrat in einer Dicke von 10µm bis mehrere mm, im einstelligen Bereich, zu erwarten. Beispielsweise kann der Lack in der Dicke von 10µm bis 3mm, insbesondere von 15µm bis 2mm und besonders bevorzugt im Bereich von 20µm bis 1mm vorliegen.

Der Füllstoff kann unimodal, also in einer Füllstofffraktion vorliegen, bevorzugt umfasst er jedoch mehrere Füllstofffraktionen und liegt daher bi- oder multimodal vor.

Die einzelnen Füllstofffraktionen können sich im Material, der Größe, der Form, des Aufbaus und der Oberflächenbeschaffenheit unterscheiden. Alle Füllstofffraktionen zusammen bilden den Füllstoffgehalt, der bevorzugt oberhalb der Perkolationsschwelle liegt, jedoch - je nach Teilleitfähigen Eigenschaften der Füllstoffpartikel - auch darunter liegen kann.

Die Füllstoffpartikel können massiv und/oder hohl, beschichtet, teilbeschichtet und/oder unbeschichtet vorliegen.

Bevorzugt liegen die Füllstoffpartikel in einer polymeren Matrix eingebettet vor.

Bevorzugt ist dabei, dass die polymere Matrix mit den Füllstoffpartikel und gegebenenfalls Lösungsmittel so aufgearbeitet ist, dass sie versprühbar ist.

Der Füllstoffgehalt beträgt in der Regel nicht mehr als 30Vol%, wobei bei besonders günstigen Füllstoffpartikel-Eigenschaften hinsichtlich ihrer Varistor-Eigenschaften, auch ganz geringe Füllstoffgehalte wie unter 1Vol%, in so geringen Konzentrationen wie 0,5Vol%, ausreichende Teilleitfähigkeit des Lackes durch die Füllstoffpartikel erzeugt werden kann.

Bei den am meisten gebräuchlichen keramischen Füllstoffen, wie beispielsweise bei Zinnoxid, Eisenoxid, Zinkoxid, Chromoxid, Manganoxid, Molybdänoxid, Bismutoxid und/oder Siliziumcarbid liegt der Füllstoff in der Regel im Bereich von 20Vol% bis 30Vol% im Lack vor.

Bei Trägerpartikel, wie hohle Glaspartikel mit dotierter Beschichtung, können die gewünschten Varistor-Eigenschaften im Lack auch bei wesentlich geringeren Füllstoffmengen - beispielsweise im Bereich von 0,5Vol% bis 5Vol%, insbesondere im Bereich 1Vol% bis 10Vol% - erzeugt werden.

Die Partikelgrößen für Körner als Partikel, globular, splittrig, ohne spezielle Form, so dass vom Hersteller eine durchschnittliche Korngröße angegeben wird, beispielsweise über REM-Aufnahmen gemessen, der Füllstofffraktionen liegen im Bereich von 500nm bis 50µm, insbesondere im Bereich von 2µm bis 20 µm. Eine Mischung von verschiedenen Partikelgrößenfraktionen führt zu verbesserten Verarbeitungseigenschaften des Lackes.

Beispiele dazu:
3 Größenfraktionen von
0,5 µm, 10µm und 50 µm
700nm, 1µm und 14µm
0,6µm, 15µm und 47µm
800nm, 12µm und 45µm
0,8µm, 11µm und 43µm
4 Größenfraktionen
800nm, 8µm, 17µm und 45µm oder
700nm, 11µm, 23 µm und 40µm

Diese und ähnliche, insbesondere in den oben genannten Größenbereichen liegende, Kombinationen führen zu niedrigerer Verarbeitungsviskosität, also besserer Verarbeitbarkeit und niedrigerer Perkolationsschwelle.

Zum Material: Die Füllstoffpartikel sind bevorzugt aus einem keramischen Material, insbesondere einem Metalloxid, einem Metallcarbid, wie Siliziumcarbid und/oder einem Metallnitrid.

Beispielsweise liegt Siliziumcarbid und/oder Zinnoxid in verschiedenen Partikelgrößenfraktionen vor.

Die Füllstofffraktionen können sich darin unterscheiden, dass sie einerseits beschichtete Füllstoffpartikel und andererseits nicht beschichtete Füllstoffpartikel umfassen. Dabei sind nicht beschichtete Füllstoffpartikel bevorzugt massiv aufgebaut, wohingegen beschichtete Füllstoffpartikel auch hohl sein können, sie dienen dann als Formfaktor.

Die massiven, unter Umständen auch beschichteten Füllstoffpartikel sind beispielsweise aus einem Metalloxid, Metallcarbid und/oder einem Metallnitrid, können aber auch eine Mischung aus diesen Metallverbindungen bilden und/oder eine Metallmischverbindung umfassen.

Beispiel für einen massiven Füllstoff mit Beschichtung ist ein Füllstoff in Plättchen-Form mit hohem Aspektverhältnis, insbesondere den Dimensionen 7µm Durchmesser und 300nm Dicke, der eine 50nm dicke Beschichtung mit Zinnoxid - SnO2 - hat, die ihrerseits Antimon-dotiert vorliegt.

Eine Metallmischverbindung ist ein gemischtes Metalloxid, wie beispielsweise ein Stannat und/oder ein Titanat. Es können aber auch Mischungen mit Zinnoxid, Zinkoxid, Eisenoxid, Titanoxid, Manganoxid und Bismutoxid eingesetzt werden. Grundsätzlich sind bei den Dotierungen der Beschichtungen der Füllstoffpartikel insbesondere die n-leitenden Dotierungen bekannt, bei den Metallmischverbindungen können jedoch auch p-Dotierungen in der Beschichtung sinnvoll eingesetzt werden.

Die Füllstoffpartikel sind z.B. metalloxidische Übergangsmetallverbindungen mit Zinn, Chrom, Molybdän, Eisen und Zink. Bevorzugt bilden die Füllstoffpartikel ein Oxid oder ein Carbid mit zumindest einem der folgenden Elementen, auch mehrere Elemente bilden unter Umständen zusammen ein Oxid: Zinn, Zink, Eisen, Molybdän, Bismut, Blei, Chrom, Mangan, Nickel, Cobalt, Titan, Vanadium, Indium, Zirkonium, Wolfram, Silizium, Antimon, Tellur, Germanium.

Füllstofffraktionen mit Füllstoffpartikeln, die einen Hohlraum - einen Formfaktor bildend - einschließen sind beispielsweise aus Glimmer, Glas, Kohlenstoff, wie beispielsweise Kohlenstoffnanoröhrchen - CNTs - oder sonstiger Keramik. Diese haben dann eine teilleitfähige Beschichtung, beispielsweise aus einem Metalloxid Zinnoxid, Bismutoxid, Titanoxid und/oder mit Siliziumcarbid.

Eine teilleitfähige Beschichtung kann bei den massiven und bei den hohlen Füllstoffpartikeln gleichermaßen vorliegen.

Nach einer vorteilhaften Ausführungsform ist die teilleitfähige Beschichtung der Füllstoffpartikel dotiert, insbesondere n-leitend dotiert, z.B. mit Elementen wie Halogen, Pseudohalogen, insbesondere Jod, Antimon, Fluor.

Die Dotierungsmenge liegt beispielsweise im Bereich bis zu 5mol%, insbesondere bei 1mol% bis 3mol%.

Die Beschichtung auf den Füllstoffpartikeln liegt beispielsweise mit einer Schichtdicke im Bereich zwischen 10nm bis 100nm, insbesondere zwischen 15nm und 80nm, insbesondere zwischen 20nm und 70nm, vor.

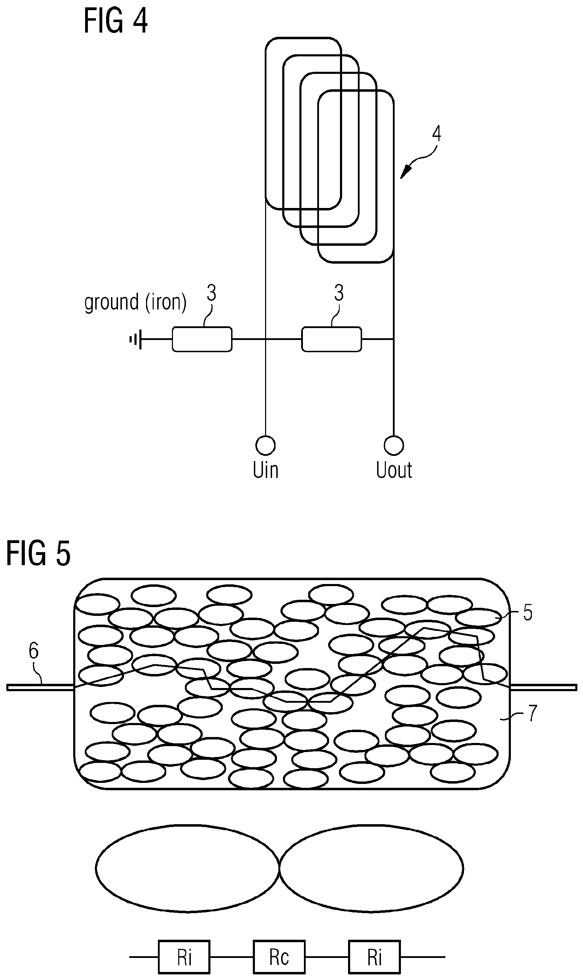

Figur 4 zeigt beispielhaft und schematisch die Wirkung der durch die Erfindung vorgeschlagenen Vorrichtung zum Spannungsausgleich bei Rechteckspannungen von Elektromotoren mit Klemmbrettschaltung. Die elektrisch teilleitfähige Vorrichtung wird in die Klemmbrettschaltung eingefügt, so dass über die kontaktierende, eine - bei hohen Spannungen, wie sie bei Teilentladungen entstehen, gebildete - elektrische Brücke bildende Vorrichtung hinweg jeweils Anfang und Ende der Phasen U, V und W sowie jede Phase mit Erde kurzgeschlossen ist.

Man erkennt in Figur 4 eine idealisierte Wicklung 4, die die Phase U bildet. Die beiden Enden Uin und Uout werden beispielsweise durch Kabel-Anschlüsse im Klemmkasten - nicht gezeigt - realisiert. Schaltungstechnisch zwischen Uin und Uout wird im Klemmkasten dann die Vorrichtung 3 zum Spannungsausgleich angebracht, so dass zwischen Uout, Uin und Erde im Fall einer hohen Spannung eine elektrische Verbindung besteht, die jedoch im Falle der normalen Spannung des Motors keine Leitfähigkeit zeigt.

Figur 5 zeigt den Aufbau des Lackes der Vorrichtung 3 aus Figur 4, der Vorrichtung zum Spannungsausgleich gemäß einer Ausführungsform der Erfindung, insbesondere den Verlauf der elektrischen Leitfähigkeit innerhalb des Lackes, im Detail.

Zu erkennen ist die den Lack bildende bettende Polymermatrix 7, in der eine Füllstofffraktion 5, viele meist aneinandergrenzende einzelne Füllstoffpartikel 5 umfassend, eingebettet ist. Wie bereits erwähnt liegt der Füllstoff 5 vorzugsweise auch in Form mehrerer Füllstofffraktionen, die sich in Form und Größe der Füllstoffpartikel hier in der Darstellung unterscheiden würden, vor. Der Einfachheit halber wird hier aber nur die eine Füllstoff-Partikelfraktion 5 aus gleichen Füllstoffpartikeln 5 gezeigt.

Zu erkennen ist auch der Leitfähigkeitspfad 6, der sich bei hohen Spannungen ausbildet, weil dann der innere Widerstand Ri der einzelnen Füllstoffpartikel 5 und der Widerstand Rc zwischen einzelnen, gegebenenfalls - aber nicht unbedingt zwingend - aneinandergrenzenden, Füllstoffpartikeln 5 drastisch sinkt. Die Füllstoffpartikel 5 werden so gewählt, dass sie im Lack 7 Varistor-Eigenschaften erzeugen, so dass der Lack 7 bei den normalen Betriebsspannungen des Elektromotors elektrisch nichtleitend, aber oberhalb eines Schwellwertes, wie beispielsweise einer Schwellspannung, die je nach Lack 7 unterschiedlich hoch ist, eine gute elektrische Leitfähigkeit zeigt. Dann bildet sich der Leitfähigkeitspfad 6 innerhalb des Lackes 7 der Vorrichtung zum Spannungsabbau 3, wie in Figur 5 gezeigt, aus.

Über den gebildeten Leitfähigkeitspfad 6 wird die hohe Spannung abgeführt, ohne dass sie durch die idealisierte Wicklung, wie in Figur 4 gezeigt, respektive den Elektromotor fließt.

Damit wird der Elektromotor vor Schäden durch Teilentladungen, wie sie bei Umrichter-betriebenen Elektromotoren sonst entstehen, wirksam und effektiv geschützt.

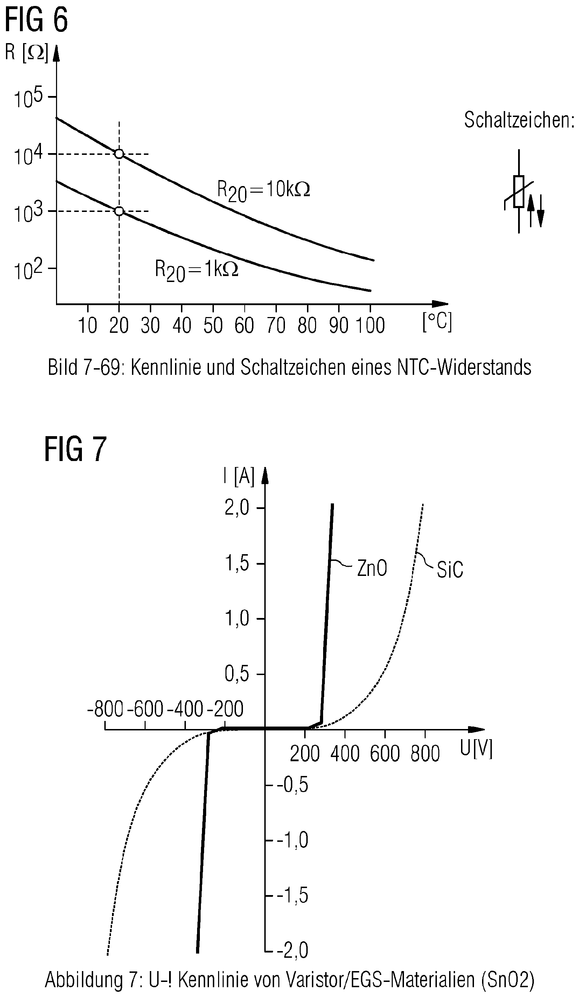

Die Figuren 6, 7 und 8 zeigen im Detail, wie der Abfall des Widerstandes durch kurzzeitig auftretende hohe Spannungen innerhalb des Lackes, der Teil der Vorrichtung 3 zum Spannungsabbau ist, erklärbar ist. Der Widerstand des Partikelnetzwerkes 5 aus Figur 5 ist dominiert durch die Ri-Korn- und/oder Rc-Partikel-übergangswiderstände, welche durch erhöhte Spannung und/oder Feldstärke, sowie durch erhöhte Frequenz überbrückt werden können. Somit ergibt sich eine deutliche Verringerung des Widerstands mit zunehmender Spannung und/oder Frequenz.

Der Sinn des partikulären Netzwerks der Füllstoffpartikel ist die Bildung eines Netzwerkes aus vielen kleinen Kondensatoren und Varistoren, welche durch Feldstärke und Frequenz gesteuert werden. Die bettende Polymermatrix der Lackschicht ist hier nur eine mechanische Fixierung, wie sie auch gesinterte Halbleiterkeramiken zeigen.

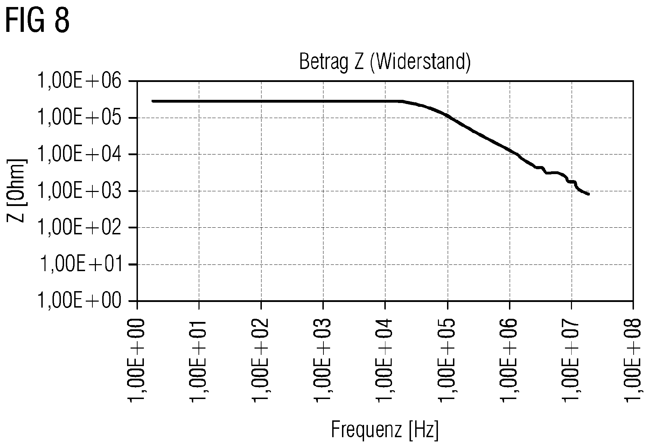

Dadurch, dass im Bereich des Umrichter-Schaltvorgangs, wie in den Figuren 1 bis 3 gezeigt, Überschwinger mit sehr hohen Frequenzen, also beispielsweise mit Frequenzen höher 1kHz bei gleichzeitig einem Vielfachen der eigentlichen Spannungen ankommen, wird der Lack durch den Varistor-Effekt, wie in Figur 7 gezeigt und den Effekt des frequenzabhängigen Widerstandes, wie in Figur 8 gezeigt, deutlich leitfähiger als für die niederfrequente Anteile mit geringerer Spannung. Somit wird also der in Abbildung 1 bis 3 gezeigte Überschwinger mit deutlich erhöhter Frequenz und höherer Spannung über die in diesem Bereich "niederohmige" Vorrichtung zum Spannungsausgleich 3 teilweise oder ganz abgeleitet und somit um dieses Maß abgeschwächt, so dass die kritische Teilentladungs- Einsetzspannung nicht mehr erreicht wird und somit ein Schutz gegenüber Umrichter-bedingte Teilentladungen erzeugt wird.

Durch die Wahl der Füllstofffraktionen hinsichtlich Material, Beschichtung, Dotierung, Füllstoffpartikel-Größenverteilung und - Formen, sowie der Füllstoffpartikel-Massenkonzentration im Lack kann der Gleichspannungswiderstand bei Raumtemperatur sowie der "alpha"-Wert, also die Steigung im U-I-Diagramm in doppel-logarithmischer Auftragung so eingestellt werden, dass keine oder nur geringe Leistungsverluste und/oder Verlustströme über die Vorrichtung zum Spannungsausgleich 3 entstehen. Beispielsweise liegt der Widerstand der Vorrichtung 3 bei normalen Bedingungen um 3 bis 4 Dekaden höher als der des Leiters in der Wicklung, beispielsweise der des Kupferleiters mit ca. 1 Ohm.

Durch die Erfindung wird eine Vorrichtung 3 zum Spannungsausgleich zur Verfügung gestellt, die mit sehr geringen Kosten herstellbar ist, also beispielsweise durch Besprühen eines Kunststoffsubstrates. Diese Vorrichtung 3 kann varianzunabhängig als Leiterplatte im Klemmbrett oder Klemmkasten eines Elektromotors integriert werden.

Durch Wahl der Füllstoffpartikel-Fraktionen ist eine stufenlose Anpassung an die jeweiligen Betriebsspannungen und Betriebsfrequenzen möglich.

Dies wird durch einen einfachen Lack erreicht, in dem sich ein partikulär teilleitfähiges Netzwerk befindet und der sich - beispielsweise - einfach aufsprühen lässt.

Die Erfindung stellt erstmals eine einfache und variabel an den jeweiligen Elektromotor anpassbare Vorrichtung zum Spannungsausgleich zur Verfügung, wobei durch die Einbettung von teilleitfähigen Füllstoffpartikeln, in einer oder mehreren Füllstofffraktionen vorliegend, in eine Matrix eine teilleitfähige Brücke erzeugt wird und die polymere und/oder keramische Matrix zur Einbettung mit oder ohne Substrat frei wählbar und damit dem jeweiligen Anforderungsprofil optimal anpassbar ist.

## Patentansprüche

1. Vorrichtung zum Spannungsausgleich bei Rechteckspannungen von Elektromotoren mit Klemmbrettschaltung, wobei in der Klemmbrettschaltung die Phasen U, V und W, jeweils in Form von ein- und ausgehenden, verkabelten Leitungen, die sich auf zumindest 6 Kabel addieren, vorliegen, und zumindest eine teilleitfähige Oberflächenbeschichtung, deren Teilleitfähigkeit auf Füllstoffpartikel in einer bettenden Matrix basiert, die das Absinken des Widerstandes in der Brücke ab dem Schwellwert maßgeblich beeinflussen, als Brücke zwischen zumindest zwei Kabeln vorgesehen ist, die zwei oder mehr der zumindest 6 Kabel-ein- und -ausgänge verbindet, und die teilleitfähige Beschichtung sich dadurch auszeichnet, dass sie einen Varistor darstellt, also ihr elektrischer Widerstand ab einem Schwellwert deutlich absinkt.

2. Vorrichtung nach Anspruch 1, wobei die Füllstoffpartikel in einer polymeren und/oder keramischen Matrix eingebettet sind.

3. Vorrichtung nach einem der Ansprüche 1 oder 2, wobei die Füllstoffpartikel zumindest zum Teil eine teilleitfähige Beschichtung haben.

4. Vorrichtung nach Anspruch 3, wobei die teilleitfähige Beschichtung der Füllstoffpartikel dotiert vorliegt.

5. Vorrichtung nach Anspruch 3 oder 4, wobei die Dicke der teilleitfähigen Beschichtung der Füllstoffpartikel im Bereich von 10nm bis 100nm liegt.

6. Vorrichtung nach einem der vorhergehenden Ansprüche, wobei zumindest eine Fraktion der Füllstoffpartikel hohle Füllstoffpartikel umfasst, die eine teilleitfähige Beschichtung, insbesondere nach einem der Ansprüche 4 oder 5, haben.

7. Vorrichtung nach einem der vorhergehenden Ansprüche, wobei ein Substrat aus Holz, Pressspan, Kunststoff, insbesondere aus Epoxidharz und/oder Polysiloxan, aus thermoplastischem Kunststoff, wie PEEK, PA, PE, PET, PBT, aus Faserverstärktem Kunststoff, aus Keramik und/oder Leder, vorliegt, das die bettende Matrix samt Füllstoffpartikel trägt.

8. Vorrichtung nach einem der vorhergehenden Ansprüche, wobei die bettende Matrix mit den Füllstoffpartikeln einen Lack bildet.

9. Vorrichtung nach Anspruch 7 oder 8, wobei der Lack ein Harz oder eine Harzmischung mit einer der Verbindungen Epoxidharz, Polyetherimid, Polysiloxan, Polysilazan, allein oder in beliebiger Kombination umfasst.

10. Vorrichtung nach einem der vorhergehenden Ansprüche 7 bis 9, wobei der Lack in einer Schichtdicke im Bereich zwischen 10µm und 3mm auf dem Substrat aufgebracht ist.

11. Vorrichtung nach einem der vorhergehenden Ansprüche, wobei die Füllstoffpartikel aus einem Metalloxid, Metallcarbid und/oder einem Metallnitrid sind, eine Mischung aus diesen Metallverbindungen bilden und/oder eine Metallmischverbindung umfassen.

12. Vorrichtung nach Anspruch 11, wobei die Füllstoffpartikel ein Oxid und/oder ein Carbid mit zumindest einem der folgenden Elemente, auch mehrere Elemente zusammen, bilden: Zinn, Zink, Eisen, Molybdän, Bismut, Blei, Chrom, Mangan, Nickel, Cobalt, Titan, Vanadium, Indium, Zirkonium, Wolfram, Silizium, Antimon, Tellur, Germanium.

13. Vorrichtung nach einem der vorhergehenden Ansprüche, wobei die Füllstoffpartikel in der bettenden Matrix in einer Konzentration von 0,5Vol% bis 30Vol% vorliegen.

14. Vorrichtung nach einem der vorhergehenden Ansprüche, wobei die Größe der Füllstoffpartikel im Bereich von 500nm bis 50µm liegt.

15. Vorrichtung nach einem der vorhergehenden Ansprüche, wobei der Füllstoff in mehreren Füllstofffraktionen vorliegt.

## Claims

1. Apparatus for voltage equalization in square-wave voltages of electric motors having a terminal board circuit, wherein in the terminal board circuit the phases U, V and W are each in the form of input and output cabled conductors which sum to at least 6 cables and at least one partially conductive surface coating, the partial conductivity of which is based on filler particles in an embedding matrix which have a determining influence on the reduction of the resistance in the bridge above the threshold value, is provided as a bridge between at least two cables which connects two or more of the at least 6 cable inputs and outputs, and the partially conductive coating has the feature that it represents a varistor, i.e. its electrical resistance markedly reduces above a threshold value.

2. Apparatus according to Claim 1, wherein the filler particles are embedded in a polymeric and/or ceramic matrix.

3. Apparatus according to either of Claims 1 or 2, wherein at least some of the filler particles have a partially conductive coating.

4. Apparatus according to Claim 3, wherein the partially conductive coating of the filler particles is doped.

5. Apparatus according to Claim 3 or 4, wherein the thickness of the partially conductive coating of the filler particles is in the range from 10 nm to 100 nm.

6. Apparatus according to any of the preceding claims, wherein at least one fraction of the filler particles comprises hollow filler particles having a partially conductive coating, in particular according to either of Claims 4 or 5.

7. Apparatus according to any of the preceding claims, wherein a substrate made of wood, pressboard, plastic, in particular of epoxy resin and/or polysiloxane, of thermoplastic, such as PEEK, PA, PE, PET, PBT, of fibre-reinforced plastic, of ceramic and/or leather, which carries the embedding matrix including filler particles, is present.

8. Apparatus according to any of the preceding claims, wherein the embedding matrix forms a lacquer with the filler particles.

9. Apparatus according to Claim 7 or 8, wherein the lacquer comprises a resin or a resin mixture comprising one of the compounds epoxy resin, polyetherimide, polysiloxane, polysilazane, alone or in any desired combination.

10. Apparatus according to any of the preceding Claims 7 to 9, wherein the lacquer is applied to the substrate in a film thickness in the range between 10 µm and 3 mm.

11. Apparatus according to any of the preceding claims, wherein the filler particles are made of a metal oxide, metal carbide and/or a metal nitride, form a mixture of these metal compounds and/or comprise a mixed metal compound.

12. Apparatus according to Claim 11, wherein the filler particles form an oxide and/or a carbide with at least one of the following elements or else two or more elements together: tin, zinc, iron, molybdenum, bismuth, lead, chromium, manganese, nickel, cobalt, titanium, vanadium, indium, zirconium, tungsten, silicon, antimony, tellurium, germanium.

13. Apparatus according to any of the preceding claims, wherein the filler particles are present in the embedding matrix in a concentration of 0.5% by volume to 30% by volume.

14. Apparatus according to any of the preceding claims, wherein the size of the filler particles is in the range from 500 nm to 50 µm.

15. Apparatus according to any of the preceding claims, wherein the filler is in the form of two or more filler fractions.

## Revendications

1. Dispositif de compensation de tension pour les tensions rectangulaires de moteurs électriques avec circuit de bornier, dans lequel les phases U, V et W sont présentes dans le circuit de bornier, respectivement sous la forme de lignes câblées entrantes et sortantes, qui s'additionnent pour former au moins 6 câbles, et au moins un revêtement de surface partiellement conducteur, dont la conductivité partielle est basée sur des particules de charge dans une matrice de lit, qui influencent de manière déterminante la baisse de la résistance dans le pont à partir de la valeur seuil, lequel est prévu comme pont entre au moins deux câbles qui relie deux ou plusieurs des au moins 6 entrées et sorties de câbles, et le revêtement partiellement conducteur se **caractérise par le fait qu'**il représente un varistor, c'est-à-dire que sa résistance électrique diminue nettement à partir d'une valeur seuil.

2. Dispositif selon la revendication 1, dans lequel les particules de charge sont incorporées dans une matrice polymère et/ou céramique.

3. Dispositif selon l'une des revendications 1 ou 2, dans lequel les particules de charge ont au moins en partie un revêtement partiellement conducteur.

4. Dispositif selon la revendication 3, dans lequel le revêtement partiellement conducteur des particules de charge est dopé.

5. Dispositif selon la revendication 3 ou 4, dans lequel l'épaisseur du revêtement partiellement conducteur des particules de charge est comprise dans la plage de 10 nm à 100 nm.

6. Dispositif selon l'une des revendications précédentes, dans lequel au moins une fraction des particules de charge comprend des particules de charge creuses ayant un revêtement partiellement conducteur, en particulier selon l'une des revendications 4 ou 5.

7. Dispositif selon l'une des revendications précédentes, dans lequel un substrat en bois, en aggloméré, en matière plastique, en particulier en résine époxy et/ou en polysiloxane, en matière plastique thermoplastique, telle que PEEK, PA, PE, PET, PBT, en matière plastique renforcée par des fibres, en céramique et/ou en cuir, est présent, lequel porte la matrice de lit avec les particules de charge.

8. Dispositif selon l'une des revendications précédentes, dans lequel la matrice de lit forme un vernis avec les particules de charge.

9. Dispositif selon la revendication 7 ou 8, dans lequel le vernis comprend une résine ou un mélange de résines avec l'un des composés suivants : résine époxyde, polyétherimide, polysiloxane, polysilazane, seul ou dans n'importe quelle combinaison.

10. Dispositif selon l'une des revendications 7 à 9 précédentes, dans lequel le vernis est appliqué sur le substrat en une épaisseur de couche comprise entre 10 µm et 3 mm.

11. Dispositif selon l'une des revendications précédentes, dans lequel les particules de charge sont constituées d'un oxyde métallique, d'un carbure métallique et/ou d'un nitrure métallique, forment un mélange desdits composés métalliques et/ou comprennent un composé métallique mixte.

12. Dispositif selon la revendication 11, dans lequel les particules de charge forment un oxyde et/ou un carbure avec au moins un des éléments suivants, également plusieurs éléments ensemble : étain, zinc, fer, molybdène, bismuth, plomb, chrome, manganèse, nickel, cobalt, titane, vanadium, indium, zirconium, tungstène, silicium, antimoine, tellure, germanium.

13. Dispositif selon l'une des revendications précédentes, dans lequel les particules de charge sont présentes dans la matrice de lit à une concentration de 0,5 % à 30 % en volume.

14. Dispositif selon l'une des revendications précédentes, dans lequel la taille des particules de charge se situe dans la plage de 500 nm à 50 µm.

15. Dispositif selon l'une des revendications précédentes, dans lequel la matière de charge est présente en plusieurs fractions de matière de charge.
